# EUROPEAN PATENT APPLICATION

(11) **EP 4 279 245 A1**
(43) Date of publication of application: **22.11.2023**
(21) Application number: 21919481.8
(22) Date of filing: 06.09.2021
(51) Int. Cl.: B29C 45/18, B29C 45/50, B29C 70/06, B29K 507/04, B29K 509/08

(54) **INJECTION MOLDING DEVICE AND INJECTION MOLDING METHOD**

(30) Priority: 15.01.2021 JP 2021005011
(71) Applicant: The Japan Steel Works, Ltd., Tokyo 141-0032 (JP)
(72) Inventor: UMEDA, Mitsuhide, Tokyo 141-0032 (JP); CHIBA, Hideki, Tokyo 141-0032 (JP); KUNIHIRO, Daisuke, Tokyo 141-0032 (JP)
(74) Representative: Locas, Davide
(86) International application number: PCT/JP2021/032703
(87) International publication number: WO 2022/153589

(57) **Abstract**

Controllability of an input amount of a filler is improved to manufacture a molded substance having higher performance. The molded substance is manufactured by using a mold injection machine including: a cylinder 11 having a supply port 13h which is located upstream and through which a resin pellet RP is supplied and a supply port 15h which is located downstream of the supply port 13h and through which a filler F is supplied; a screw S disposed inside the cylinder; and a cutting machine 15. The cutting machine 15 continuously cuts a thread-state fiber (roving R) to a constant length, and inputs cut fiber pieces (filler F) into the supply port 15h.

## Description

### TECHNICAL FIELD

The present invention relates to a mold injection machine and a mold injection method, and, in particular, is favorably applicable to a mold injection machine and a mold injection method for forming a filler-containing resin molded substance.

### BACKGROUND ART

In recent years, attention has been paid to resin composite materials in which filler (such as carbon fiber) is employed. In particular, improvement in mechanical strength of a molded substance by manufacturing the molded substance from a resin containing the filler has been studied.

Such a composite material can be obtained by kneading the resin and the filler using a screw-equipped machine such as a mold injection machine or an extruder.

For example, Patent Document 1 discloses a mold injection technique using a molding material containing a carbon fiber resin pellet and a glass fiber resin pellet.

### RELATED ART DOCUMENT

### PATENT DOCUMENT

Patent Document 1: Japanese Patent Application Laid-Open Publication No. 2018-167409

### SUMMARY OF THE INVENTION

### PROBLEMS TO BE SOLVED BY THE INVENTION

The present inventors have worked on the research and development regarding a filler-containing resin with use of a mold injection machine and an extruder, and have diligently studied improvement in property of a resin molded substance by addition of a filler.

In the course of the research and development, the inventors have found out a technique capable of improving controllability of an input amount of the filler. Furthermore, the inventors have found out a technique capable of improving property of a resin molded substance by keeping a length of the filler that remains in resin for longer period of time.

Other objects and novel characteristics will be apparent from the description of the present specification and the accompanying drawings.

### MEANS FOR SOLVING THE PROBLEMS

A mold injection machine disclosed in an embodiment of the present application includes: a cylinder having a first hole which is located upstream and through which a resin material is supplied and a second hole which is located downstream of the first hole and through which filler is supplied; a cutting machine; and a screw disposed inside the cylinder. Moreover, the cutting machine continuously cuts a thread-state fiber to a constant length, and inputs cut fiber pieces into the second hole.

A mold injection method disclosed in an embodiment of the present application includes: (a) a step of preparing a mold injection machine and a mold connected to a tip of the mold injection machine, the mold injection machine including a cylinder, a screw disposed inside the cylinder, and a cutting machine provided to the cylinder; (b) a step of forming molten resin by supplying a resin material into the cylinder through a first hole provided upstream of the cylinder and melting the resin material; (c) a step of forming molten resin containing a filler by supplying the filler to a second hole provided downstream of the first hole of the cylinder and kneading the molten resin and the fille; (d) a step of measuring an amount of the molten resin containing the filler at a tip of the screw by moving the screw backward so that the tip of the screw moves backward by a first stroke from a first position to a second position; and (e) a step of forming a molded substance by pouring the molten resin containing the filler into the mold by moving the screw forward. Moreover, in the step (c), a thread-state fiber is continuously cut to have a constant length by the cutting machine, and cut fiber pieces are supplied into the second hole.

### EFFECTS OF THE INVENTION

According to a mold injection machine disclosed in an embodiment of the present application, controllability of an input amount of a filler can be improved. Further, according to a mold injection machine disclosed in an embodiment of the present application, a resin molded substance having a favorable property can be manufactured.

According to a mold injection method disclosed in an embodiment of the present application, controllability of an input amount of filler can be improved. Further, according to a mold injection method disclosed in an embodiment of the present application, a resin molded substance having a favorable property can be manufactured.

### BRIEF DESCRIPTIONS OF THE DRAWINGS

FIG. 1 is a diagram showing a configuration of a manufacturing machine (manufacturing system) for a filler-containing resin molded substance according to an embodiment;
FIG. 2 is general diagrams each showing a configuration of a cutting machine;
FIG. 3 is a diagram showing a thread-state carbon fiber drawn from a roving;
FIG. 4 is a diagram (photograph) showing carbon fiber pieces cut to a length of 5 mm by the cutting machine;
FIG. 5 is a diagram showing a configuration of a manufacturing machine for a filler-containing resin molded substance according to a comparative example;
FIG. 6 is a diagram (photograph) showing a state immediately after supply of the carbon fiber pieces by a feeder;
FIG. 7 is a diagram showing a configuration of a manufacturing machine for manufacturing a filler-containing resin molded substance according to the comparative example;
FIG. 8 is a table showing a supply amount supplied by a weight-type feeder;
FIG. 9 is a table showing a supply amount supplied by the cutting machine of the embodiment;
FIG. 10 is schematic cross-sectional views each showing a mold injection step of the embodiment; and
FIG. 11 is a graph showing a relation between a cut length and a shielding performance.

### BEST MODE FOR CARRYING OUT THE INVENTION

Hereinafter, embodiments will be described in detail with reference to the examples and the accompanying drawings. Note that components having the same function are denoted by the same reference signs throughout all the drawings for describing the embodiments, and the repetitive description thereof will be omitted.

### (Embodiment)

In the present embodiment, a mold injection machine and a mold injection method for forming a filler-containing resin molded substance will be explained.

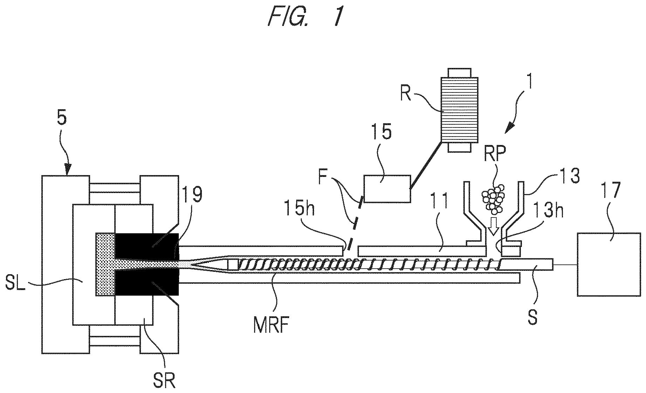

FIG. 1 is a diagram showing a configuration of a manufacturing machine (manufacturing system) for a filler-containing resin molded substance according to the present embodiment. This machine includes a mold injection machine 1 and a pressing machine 5. In the present embodiment, a molded substance (cast substance) is formed by directly mixing a fillerfree resin pellet (resin material) with a filler.

The mold injection machine 1 is a machine for forming a filler-containing molten resin (MRF) by mixing and kneading a resin pellet "RP" with a filler "F" while melting the supplied resin pellet RP. The mold injection machine 1 includes: a cylinder 11, a temperature of which is controlled by temperature controlling means not illustrated; a screw "S" disposed inside the cylinder 11; and a screw driving section 17 connected to the screw S. A discharge nozzle 19 is provided at a tip of the cylinder 11.

The cylinder 11 has a supply port 13h for the resin pellet RP disposed upstream of the cylinder 11 and a supply port 15h for the filler F. The supply port 13h is connected to a hopper (supply machine, input machine) 13 for the resin pellet RP. Further, the supply port 15h is a supply port for the filler F, and the cut fiber pieces are supplied as the filler F from a cutting machine 15 disposed above the supply port 15h.

Thus, in the present embodiment, the supply port 15h for the filler F is equipped with the cutting machine (cutter machine) 15. The cutting machine 15 continuously cuts a thread-state fiber (roving R) wound around a member to a constant length, and inputs the cut fiber pieces into the supply port 15h as needed. By cutting the thread-state fiber to a constant length and subsequently inputting the fiber pieces into the supply port 15h as described above, the fiber pieces (filler F) can be supplied with high controllability.

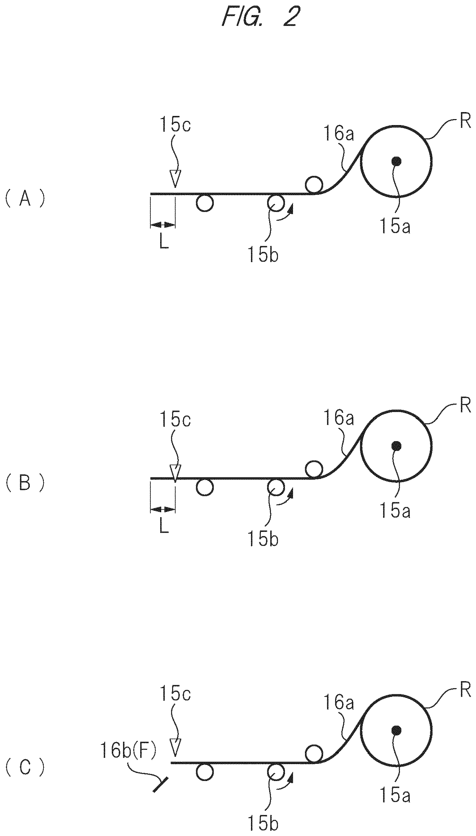

The cutting machine may be any machine as long as allowing the thread-state fiber to be input and cut to have a constant length. However, for example, a cutting machine shown in FIG. 2 is usable. FIG. 2 is general diagrams each showing a configuration of the cutting machine. The cutting machine of FIG. 2 includes: a set section 15a to which the thread-state fiber (roving R) wound around the member is attached; a roller 15b that feeds a thread-state fiber 16a drawn from the roving R by a certain length; and a cutter blade 15c. The thread-state fiber 16a is drawn from the roving R as shown in FIG. 2A, and is protruded out by a predetermined length L from the position of the cutter blade 15c by rotation of the roller 15b, and then, is cut as shown in FIG. 2B by downward movement of the cutting blade 15c. Then, fiber pieces 16b (F) cut to a predetermined length (cut length) L as shown in FIG. 2C drop and are input into the supply port 15h. Note that the supply port 15h may be provided with a funnel-shaped guide.

After this, the process returns to the state of FIG. 2(A), and the thread-state fiber 16a is fed out by the predetermined length L, and is cut (see FIG. 2B, FIG. 2C). By such repetition of the states of FIGs. 2A to 2C, the fiber pieces 16(F) each having the predetermined length L are input into the supply port 15h as needed.

As the cutting machine, specifically, a belt cutter produced by Ace Cutter Co., Ltd. (e.g. Desktop Cutter 50K-FW) is applicable.

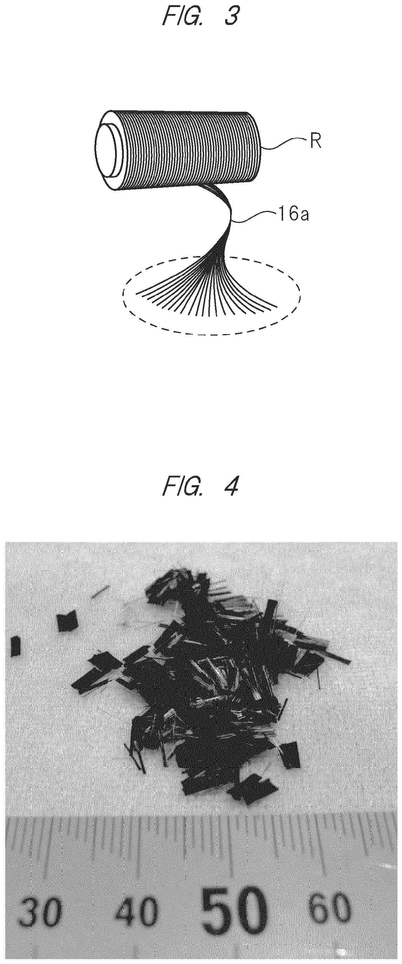

Further, as the thread-state fiber (roving) wound around the member, a fiber having a filament diameter (single-fiber diameter) of 5 um to 15 um and a filament number of 3000 to 60000 is applicable. Specifically, materials produced by Mitsubishi Kasei Kogyo Kabushiki Kaisha (Mitsubishi Chemical Corporation) (model number: TR30S-3L, TR50S-12L, and TRH50-60M), materials produced by Toray Industries, Inc., (T700SC-24000) or others is applicable. FIG. 3 is a diagram showing a thread-state carbon fiber drawn from a roving. A width of the thread (string, tape-shaped member) is, for example, about 5 mm. As this width, a range of about 2 mm to 20 mm is applicable. The thread-state carbon fiber is composed of a plurality of single fibers bundled together. For example, epoxy-based resin dissolved in an organic solvent, epoxy-based resin emulsified and dispersed in water or others used as a binder is adhered to surfaces of the plurality of single fibers to bond the single fibers to each other and provide a thread (string, tape-shaped member) with high handleability. The bonding strength based on such a binder is so low that the thread-state carbon fiber is easily loosed (see a portion surrounded by a dashed line in FIG. 3).

Since the carbon fiber is loosed as described above, dispersibility in the molten resin (MRF) is better. Furthermore, in the progression of kneading using the screw, the carbon fiber is miniaturized by shearing stress of the screw, and therefore, forms the filler F of about 0.1 mm to 3.0 mm in the final resin molded substance.

FIG. 4 is a diagram (photograph) showing carbon fiber pieces cut to a length of 5 mm by the cutting machine. As shown in FIG. 4, immediately after the cutting, the carbon fiber pieces are observed to be slightly loosed but kept in a bundle state (bundle state of single fibers).

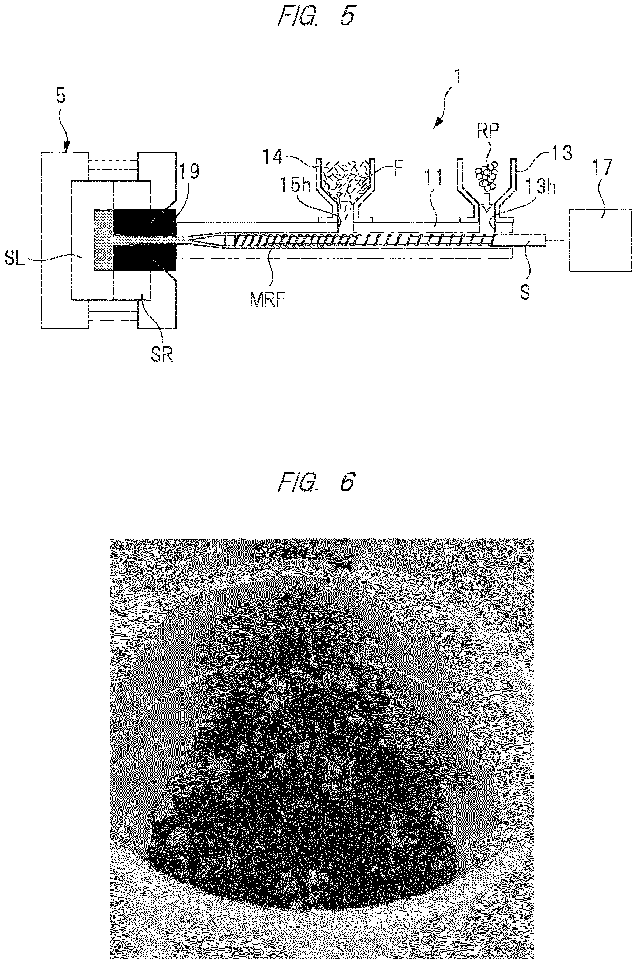

On the other hand, as shown in FIG. 5, it is also possible to prepare the carbon fiber pieces (F) and input them by using a feeder 14. However, the carbon fiber pieces are loosed by stirring or vibration of the carbon fiber pieces in the feeder to become in a cotton state. FIG. 5 is a diagram showing a configuration of a manufacturing machine for a filler-containing resin molded substance according to a comparative example. FIG. 6 is a diagram (photograph) showing a state of the carbon fiber pieces observed immediately after the supply to the feeder. The cotton-state carbon fiber pieces as shown in FIG. 6 are difficult to be stably supplied.

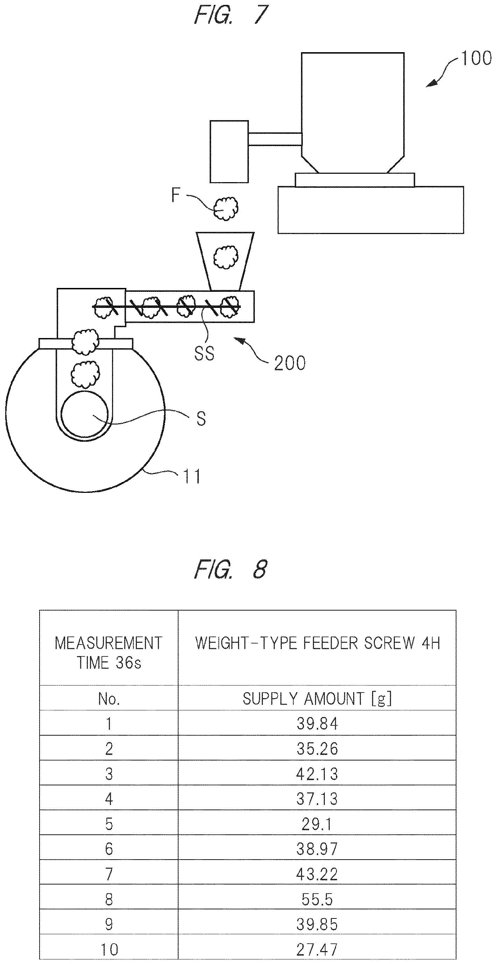

For example, there may be such a problem (bridge problem) that the cotton-state carbon fiber pieces become entangled near the outlet of the feeder 14 and do not drop into the supply port 15h. Such a problem may be avoided by forcibly push the cotton-state carbon fiber pieces into the cylinder 11 by using the screw SS while using, for example, a side feeder 200 shown in FIG. 7. However, this leads to a complex machine configuration, and leads to higher costs. Further, there may be the bridge problem when the carbon fiber pieces are input from a weight-type feeder 100 to the side feeder 200. FIG. 7 is a diagram showing a configuration of the manufacturing machine for the filler-containing resin molded substance according to the comparative example.

On the other hand, according to the present embodiment, the thread-state fiber 16a can be fed out by a predetermined length L, and be cut as needed, and besides, be input into the supply port 15h as needed, and therefore, the carbon fiber pieces can be input with hardly loosing. Time taken from the cutting to the input into the supply port 15h is equal to or shorter than 5 seconds.

Further, it is also easy to control the input amount of the carbon fiber pieces, and the carbon fiber pieces can be stably supplied. Further, as described later, even in intermittent input along with the input resin amount, the input of the carbon fiber pieces can be easily switched between stopping and starting, and the uniformity of the supply amount of the carbon fiber pieces can be improved for each resin molded substance since the input amount can be easily controlled. Further, a fiber feeding speed can be also easily controlled, and the supply amount of the carbon fiber pieces can be easily controlled by switching of the fiber feeding speed. The fiber feeding speed can be controlled in the range of 150 mm/s to 450 mm/s.

Further, the supply amount of the carbon fiber pieces can be increased by stacking a plurality of thread-state carbon fibers and cutting them. Alternatively, the supply amount of the carbon fiber pieces can be increased by arranging a plurality of the thread-state carbon fibers and cutting them at the same time.

Alternatively, the supply amount of carbon fiber pieces can be increased by forming a plurality of the supply ports 15h and placing the cutting machinees for the supply ports 15h, respectively.

Further, according to the present embodiment, the length of the carbon fiber piece can be also easily controlled, and the length L can be appropriately changed in accordance with, for example, the intended use of the molded substance. The length L can be controlled in accordance with a diameter of the screw to be used. For example, it is preferable to control the length L so as to be smaller than the maximum circumference of the screw located immediately below the supply port 15h. For example, the length L can be equal to or shorter than 140 mm when the screw diameter ϕ is 46 mm. By controlling the length L in accordance with the diameter of the screw to be used, the excessive winding of the carbon fiber around the screw can be reduced. This makes it possible to reduce the clogging of the carbon fiber caused by the excessive winding around the screw, failure in the miniaturization and failure in the dispersion of the filler, and others, and to enhance the dispersibility of the fine filler F in the molten resin.

Further, as described later, there is tendency that the larger the length of the carbon fiber piece is, the larger the length of the filler in the resin molded substance is. The large length of the filler in the molded substance improves strength of the resin molded substance. Further, the shielding performance (shielding property) of the resin molded substance is improved. Thus, the properties of the resin molded substance can be increased by increasing the length of the carbon fiber pieces.

FIG. 8 is a table showing the supply amounts in the weight-type feeder. As shown in FIG. 8, the supply amounts in cases of the supply of the carbon fiber pieces from the weight-type feeders No. 1 to No. 10 (ten times) were examined. The duration of the supply was 36 seconds. In these cases, the maximum value was 55.5 g while the minimum value was 27.47 g, and the maximum value was about twice as large as the minimum value. The average was 38.8 g, and the standard deviation was 7.4.

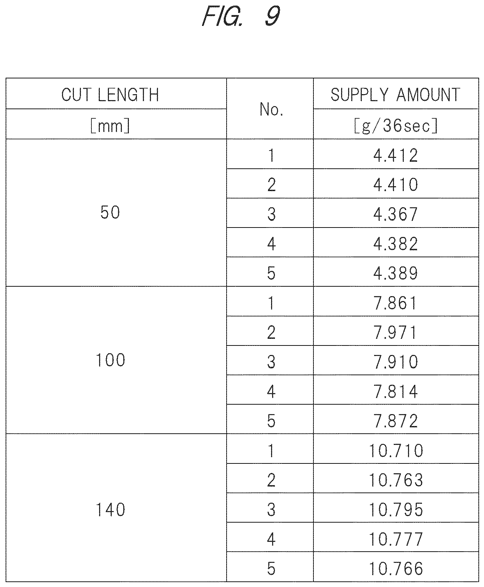

FIG. 9 is a table showing the supply amount in the cutting machine according to the present embodiment. In cases of cut lengths of 50 mm, 100 mm and 140 mm, the carbon fiber pieces (manufactured by Mitsubishi Kasei Kogyo Kabushiki Kaisha (Mitsubishi Chemical Corporation), model number TRH50-60M) were supplied from the cutting machine (see FIG. 2, Desktop Cutter 50K-FW) five times No. 1 to No. 5 for 36 seconds. In the case of the length of 50 mm, the maximum value was 4.412 g, and the minimum value was 4.367 g. The average was 4.392 g, and the standard deviation was 0.017. In the case of the length of 100 mm, the maximum value was 7.971 g, and the minimum value was 7.814 g. The average was 7.886 g, and the standard deviation was 0.053. In the case of the length of 140 mm, the maximum value was 10.795 g, and the minimum value was 10.710 g. The average was 10.726 g, and the standard deviation was 0.028.

Thus, it was found that the carbon fiber pieces can be stably supplied by using the cutting machine of the present embodiment to improve the controllability of the input amount of the filler. Further, it was also found that the input amount that is about 5 g per 36 seconds can be also controlled by the cutting machine of the present embodiment so that the filler content of the resin molded substance can be finely adjusted.

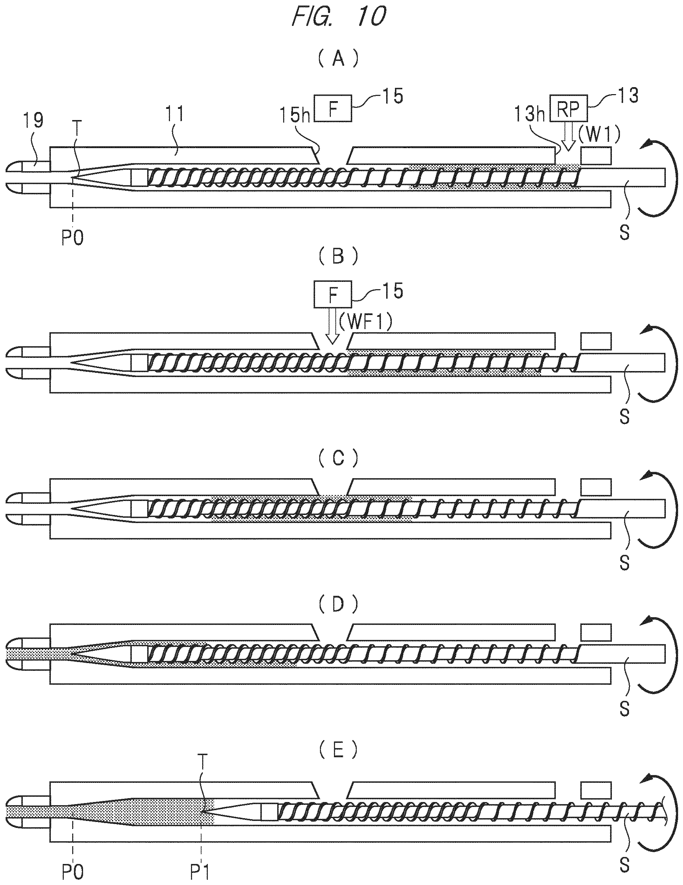

Next, a mold injecting step of the present embodiment will be explained. FIG. 10 is schematic cross-sectional views each showing the mold injecting step of the present embodiment.

First, as shown in FIG. 10A, a resin pellet RP is supplied through the supply port 13h corresponding to the hopper 13 located upstream of the cylinder 11. Assume that its supply amount is "W1". In this case, the tip T of the screw S is located at a first position P0 that is furthest downstream of the cylinder 11. At the first position P0, the screw S is rotated. In this case, the resin pellet RP supplied into the cylinder 11 is gradually melted to become the molten resin by heat generated from the cylinder 11 and shearing stress generated by the rotation of the screw S, and is conveyed downstream. Note that it is assumed here that the rotation direction of the screw S is a first direction (direction in which the molten resin is conveyed downstream).

Next, as shown in FIG. 10B, the filler F is supplied at the point of time where the molten resin (RP) has been conveyed to the supply port 15h for the filler F. Assume that its supply amount is "WF1". In this case, for example, if an amount of the resin discharged once and a retained amount of the resin (resin that remains after the discharge) are already supplied, the supply of the resin pellet RP is stopped at this point of time, and the amount of a portion of the molten resin located between the supply port 15h and the supply port 13h of the cylinder 11 corresponds to the supply amount W1. Moreover, the supply amount W1 is an amount corresponding to the amount discharged once (including the above-described retained amount in the case of the first discharge).

In this case, in the present embodiment, the filler F can be stably supplied from the cutting machine 15 to the supply port 15h as described above. As a result, a filler-containing molten resin (MRF) can be formed at high accuracy, and the dispersibility (uniformity) of the filler F into the molten resin can be improved by the subsequent kneading.

Note that the stop timing (stop duration) of supply of the resin pellet RP is not limited to the timing shown in FIG. 10A.

Furthermore, by continuation of the rotation of the screw S, a kneaded product of the molten resin and the filler F is conveyed to the downstream of the cylinder 11 as shown in FIG. 10C. Moreover, as shown in FIG. 10D, the kneaded product reaches the tip T of the screw S. After this, the kneaded product reaches the tip T of the screw S as needed. And, when its storage amount is larger, the back pressure of the screw S increases in accordance with the storage amount. For example, the back pressure of the screw S reaches a first specified value (e.g. 5 MPa) .

Next, as shown in FIG. 10E, the screw S is moved backward by a distance (first stroke, distance between P0 and P1, e.g. 60 mm) corresponding to the amount (1S) discharged once (in an amount measuring step). At this backward movement of the screw S, the rotation direction of the screw S is assumed to be the first direction.

Next, the screw S is moved forward (in an injecting step). In this case, the rotation of the screw S is under the stop. In this manner, the kneaded product of the molten resin and the filler F stored at the tip of the screw S is discharged toward the pressing machine 5 through the discharge nozzle (see FIG. 1).

The pressing machine (5) includes a first mold SL and a second mold SR as shown in FIG. 1, and a molded substance is formed by pouring (injecting, discharging) the filler-containing molten resin MRF into a gap between these molds and solidifying the resin to have a shape corresponding to the molds.

Thus, in the present embodiment, the mold injection machine is provided with the cutting machine for inputting the filler F, and therefore, the filler F can be stably input through the supply port 15h.

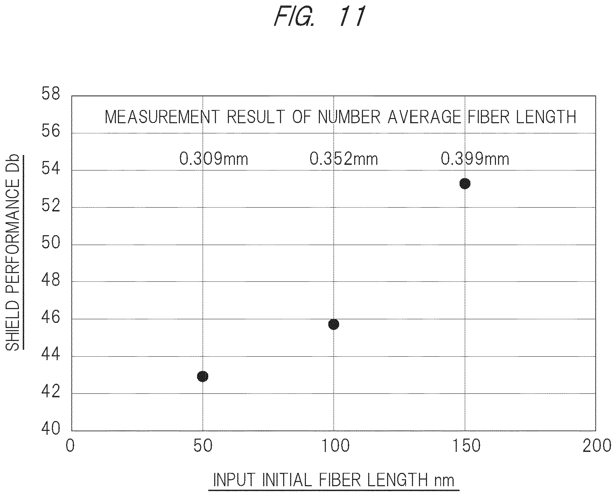

FIG. 11 is a graph showing a relation between the cut length and the shielding performance. A horizontal axis represents an initial input fiber length [mm] which is the cut length, and a vertical axis represents the shielding performance [dB]. An electromagnetic wave shielding performance at a frequency of 24-GHz band was examined for the resin molded substances resulted from the supply of the carbon fiber pieces of respective lengths.

As shown in FIG. 11, there is tendency that the longer the initial input fiber length which is the cut length is, the higher the shielding performance is. Further, the number average fiber length in the resin molded substances was examined. In the case of the initial input fiber length of 50 mm, the number average fiber length in the resin molded substance was 0.309 mm. In the case of the initial input fiber length of 100 mm, the number average fiber length in the resin molded substance was 0.352 mm. In the case of the initial input fiber length of 150 mm, the number average fiber length in the resin molded substance was 0.399 mm. Thus, it is considered that the larger the initial input fiber length which is the cut length is, the larger the length of the filler in the resin molded substance is, and the higher the shielding performance is.

For example, when the initial input fiber length is equal to or larger than 50 mm, the fiber length (length of a fiber piece) in the resin molded substance can be made equal to or larger than 0.3 mm. Further, the shielding performance of the resin molded substance can be made equal to or larger than 42 dB.

The resin to be used in the present embodiment is not limited. However, for example, the following resin can be used. As the resin, thermoplastic resin can be used. For example, polyethylene, polypropylene, polyamide, polyethylene terephthalate, polyimide, polyether ketone or others is applicable as the thermoplastic resin. Single use of these types of resins may be applicable, or combination use of a plurality of types may be applicable.

The carbon fiber has been explained above as example. The cutting machine of the present embodiment may be applied to glass fiber in place of the carbon fiber.

### (Application Example)

In the above-described embodiment (see FIG. 1 and others), the supply port for the filler F is provided downstream of the supply port 13h for the thermoplastic resin. However, the filler F may be added through the same supply port 13h as that for the thermoplastic resin. In this case, the supply port 13h can be separated for the filler F and for the thermoplastic resin. Further, the filler F or the thermoplastic resin may be added through the supply port 13h at different timings by, for example, making the arrangement positions of the cutting machine for the filler F and the hopper (feeder) for the thermoplastic resin movable.

In the foregoing, the invention made by the inventors of the present application has been concretely described on the basis of the embodiments and the examples. However, it is needless to say that the present invention is not limited to the foregoing embodiments or examples, and various modifications can be made within the scope of the present invention.

## Claims

1. A mold injection machine comprising:
a cylinder having a first hole which is located upstream and through which a resin material is supplied and a second hole which is located downstream of the first hole and through which a filler is supplied;
a cutting machine; and
a screw disposed inside the cylinder,
wherein the cutting machine continuously cuts a thread-state fiber to a constant length, and inputs cut fiber pieces into the second hole.

2. The mold injection machine according to claim 1,
wherein the fiber is carbon fiber or glass fiber.

3. The mold injection machine according to claim 1,
wherein the cutting machine cuts the thread-state fiber to the constant length after arranging a plurality of the thread-state fibers or stacking the plurality of the thread-state fibers.

4. The mold injection machine according to claim 1,
wherein a length of the cut fiber piece is equal to or smaller than a circumference of the screw located immediately below the second hole.

5. The mold injection machine according to claim 1,
wherein a width of the cut fiber piece is equal to or larger than 2 mm and equal to or smaller than 20 mm.

6. The mold injection machine according to claim 1,
wherein the cut fiber pieces are input into the cylinder within 5 seconds.

7. A mold injection method comprising steps of:
(a) preparing a mold injection machine and a mold connected to a tip of the mold injection machine, the mold injection machine including a cylinder, a screw disposed inside the cylinder, and a cutting machine provided to the cylinder;
(b) forming molten resin by supplying a resin material into the cylinder through a first hole provided upstream of the cylinder and melting the resin material;
(c) forming molten resin containing a filler by supplying the filler to a second hole provided downstream of the first hole of the cylinder and kneading the molten resin and the filler;
(d) measuring an amount of the molten resin containing the filler at a tip of the screw by moving the screw backward so that the tip of the screw moves backward by a first stroke from a first position to a second position; and
(e) forming a molded substance by pouring the molten resin containing the filler into the mold by moving the screw forward,
wherein, in the step (c), by the cutting machine, a thread-state fiber is continuously cut to have a constant length, and cut fiber pieces are input into the second hole.

8. The mold injection method according to claim 7,
wherein the fiber is carbon fiber or glass fiber.

9. The mold injection method according to claim 7,
wherein the cutting machine cuts the thread-state fiber to the constant length after arranging a plurality of the thread-state fibers or stacking the plurality of the thread-state fibers.

10. The mold injection method according to claim 7,
wherein a length of the cut fiber piece is equal to or smaller than a circumference of the screw located immediately below the second hole.

11. The mold injection method according to claim 7,
wherein a width of the cut fiber piece is equal to or larger than 2 mm and equal to or smaller than 20 mm.

12. The mold injection method according to claim 7,
wherein the cut fiber pieces are input into the cylinder within 5 seconds.

13. The mold injection method according to claim 7,
wherein a length of a fiber piece in the molded substance is equal to or larger than 0.3 mm.

14. The mold injection method according to claim 7,
wherein a shielding performance of the molded substance is equal to or higher than 42 dB.

15. A mold injection machine comprising:
a cylinder having a hole;
a cutting machine; and
a screw disposed inside the cylinder,
wherein the cutting machine continuously cuts a thread-state fiber to a constant length, and inputs cut fiber pieces into the hole.

16. A mold injection method comprising steps of:
(a) preparing a mold injection machine and a mold connected to a tip of the mold injection machine, the mold injection machine including a cylinder, a screw disposed inside the cylinder, and a cutting machine provided to the cylinder;
(b) forming molten resin containing a filler by supplying a resin material and the filler into the cylinder through a hole provided in the cylinder and kneading the molten resin and the filler;
(c) measuring an amount of the molten resin containing the filler at a tip of the screw by moving the screw backward so that the tip of the screw moves backward by a first stroke from a first position to a second position; and
(d) forming a molded substance by pouring the molten resin containing the filler into the mold by moving the screw forward,
wherein, in the step (b), by the cutting machine, a thread-state fiber is continuously cut to have a constant length, and cut fiber pieces are input into the hole.
